# FASCICULE DE BREVET EUROPEEN

(11) **EP 0 780 156 B1**
(45) Date de publication et mention de la délivrance du brevet: **30.09.2009**
(21) Numéro de dépôt: 96402806.2
(22) Date de dépôt: 19.12.1996
(51) Int. Cl.: B01J 23/89

(54) **Catalyseur d'oxydation non-selectif et ses utilisations**
Nichtselektiver Oxidationskatalysator und seine Verwendungen
Unselective oxidation catalyst and uses thereof

(30) Priorité: 22.12.1995 FR 9515341
(43) Date de publication de la demande: 25.06.1997
(73) Titulaire: Institut Français du Pétrole, 92852 Rueil-Malmaison Cedex (FR)
(72) Inventeur: Euzen, Patrick, 92500 Rueil Malmaison (FR); Rebours, Stéphane, 78400 Chatou (FR); Tocque, Eric, 92500 Rueil Malmaison (FR); Mabilon, Gil, 78420 Carrieres sur Seine (FR)

(56) Documents cités:
- EP-A- 0 125 565
- EP-A- 0 326 845
- EP-A- 0 441 173
- EP-A- 0 525 677
- EP-A- 0 665 048
- US-A- 4 857 499

## Description

La présente invention concerne un catalyseur d'oxydation non-sélective et son utilisation dans la combustion catalytique d'hydrocarbures, de monoxyde de carbone, d'hydrogène ou de leurs mélanges et dans la dépollution des gaz d'échappement de véhicules automobiles alimentés au gaz naturel.

La combustion conventionnelle, réalisée en présence d'une flamme, habituellement utilisée dans les procédés de combustion d'hydrocarbures, tels que le méthane, est un processus difficilement contrôlable. Elle se produit dans un domaine de concentrations air/hydrocarbure bien déterminé et conduit, outre à la formation de dioxyde de carbone et d'eau, à la production de polluants comme le monoxyde de carbone et les oxydes d'azote.

La combustion est dite catalytique lorsqu'elle consiste en une oxydation du combustible à la surface du catalyseur. Elle conduit alors aux mêmes produits et libère la même quantité d'énergie que la combustion conventionnelle, mais à beaucoup plus basse température. Ses principaux avantages qui résultent du contrôle de la combustion d'un mélange pauvre en carburant en dehors de la plage d'inflammabilité sont la limitation des points chauds à l'origine des NO_{X} et l'absence de risques d'inflammation ou d'explosion. La combustion catalytique produit donc très peu de polluants tels que NO_{X} et CO. On peut également mentionner qu'elle conduit à des dispositifs plus compacts et qu'elle permet de brûler une très grande variété de composés.

Ainsi que le décrivent notamment D.Reay dans "Catalytic Combustion : Current Status and Implications for Energy Efficiency in the Process Industries. Heat Recovery Systems & CHP, 13. n°5, pp 383-390, 1993" et D. Jones et S.Salfati dans "Rev. Gén. Therm. Fr. n°330-331, pp 4101-406, Juin-Juillet 1989", les applications de la combustion catalytique sont multiples : panneaux et tubes radiants, réchauds catalytiques, turbines à gaz, cogénération, brûleurs, manchons catalytiques pour tubes de vapo-reformage, production de gaz chauds dans le domaine du chauffage par contact direct et réacteurs à plaques catalytiques. En raison de la sévérisation accélérée des normes sur les NO_{X} émises par les procédés de combustion, la chambre de combustion catalytique peut remplacer avantageusement les brûleurs conventionnels qui sont à l'origine de teneurs élevées en NO_{X}. Les conditions de fonctionnement - milieu très oxydant - d'une chambre de combustion catalytique sont très éloignées des applications de post-combustion automobile : traitement des gaz d'échappement des véhicules à essence fonctionnant à la richesse 1 avec une teneur élevée en NO_{X} et traitement des gaz d'échappement des véhicules diesel avec une forte teneur en particules et en NO_{X}. Ces différences capitales impliquent de rechercher des formulations de catalyseurs de combustion dédiées.

Les catalyseurs de combustion sont généralement préparés à partir d'un substrat monolithique, en céramique ou en métal, sur lequel on dépose une fine couche de support constituée d'un ou plusieurs oxydes réfractaires de surface et de porosité supérieures à celles du substrat monolithique. Sur cet oxyde est dispersée la phase active composée essentiellement des métaux du groupe du platine.

La stabilité thermique, l'activité catalytique à basse température et la stabilité de l'activité catalytique constituent généralement les trois principaux critères de sélection du catalyseur.

Il existe des catalyseurs de combustion plus résistants à haute température. Dans certains procédés de combustion, les catalyseurs peuvent être soumis à des températures très élevées qui sont souvent supérieures à 1000°C. Mais, au cours de leur utilisation à ces températures élevées, il s'avère que les catalyseurs subissent une dégradation qui diminue leurs performances catalytiques. Le frittage du support ainsi que le frittage de la phase active et/ou son encapsulation par le support font partie des causes les plus couramment citées pour expliquer cette dégradation. Dans le cas de tels catalyseurs fonctionnant à haute température, la résistance thermique peut devenir le critère prédominant au détriment de l'activité catalytique. Les supports de ces catalyseurs sont généralement à base d'alumine. Il est connu de l'homme de l'art que l'on peut stabiliser efficacement la chute de surface spécifique par un dopant approprié. Les terres rares et la silice sont souvent cités parmi les stabilisants les plus performants de l'alumine. Les catalyseurs préparés par cette technique sont décrits entre autre dans le brevet US-A- 4 220 559. Dans ce document, le catalyseur comprend des métaux du groupe du platine ou des métaux de transition déposés sur de l'alumine, un oxyde d'un métal choisi dans le groupe constitué par le baryum, le lanthane et le strontium et un oxyde d'un métal choisi dans le groupe constitué par l'étain, le silicium, le zirconium et le molybdène.

En outre, afin de limiter le frittage de la phase métallique active, il a été proposé d'ajouter divers stabilisants à base essentiellement d'oxydes de métaux de transition.

Ainsi, dans le brevet américain US-A- 4 857 499, le catalyseur comprend un support poreux dont le diamètre des pores est compris entre 150 et 300Å et dont la proportion en poids rapportée au substrat est de façon préférentielle comprise entre 50 et 200g/l, une phase active incluant au moins 10% en poids, rapporté au support poreux, d'un métal précieux choisi dans le groupe formé par le palladium et le platine; un premier promoteur incluant au moins un élément choisi dans le groupe constitué par le lanthane, le cérium, le praséodyme, le néodyme, le baryum, le strontium, le calcium et leurs oxydes dont la proportion en poids rapportée au support poreux est comprise entre 5 et 20%; un deuxième promoteur incluant au moins un élément choisi dans le groupe formé par le magnésium, le silicium et leurs oxydes dont la proportion en poids rapportée à la phase active est inférieure ou égale à 10%, et un troisième promoteur incluant au moins un élément choisi dans le groupe constitué par le nickel, le zirconium, le cobalt, le fer et le manganèse et leurs oxydes dont la proportion en poids rapportée à la phase active est inférieure ou égale à 10%. En outre, ledit catalyseur peut être déposé sur un substrat monolithique appartenant au groupe formé par la cordierite, la mullite, l'alumine alpha, la zircone et l'oxyde de titane ; la proportion en poids de support poreux rapportée au volume de substrat étant comprise entre 50 et 200g/l.

Dans le brevet américain US - A - 4 793 797, le catalyseur comprend un support inorganique choisi dans le groupe constitué par les oxydes, les carbures et les nitrures d'éléments appartenant aux groupes IIa, IIIa et IV de la classification périodique des éléments ou choisi dans le groupe constitué par La-β-Al₂O₃, Nd-β-Al₂O₃, Ce-β-Al₂O₃ ou Pr-β-Al₂O₃, au moins un métal précieux choisi dans le groupe constitué par le palladium, le platine, le rhodium et le ruthénium, et au moins un oxyde d'un métal de base sélectionné dans le groupe constitué par le magnésium, le manganèse, le cobalt, le nickel, le strontium, le niobium, le zinc, l'étain, le chrome et le zirconium tel que le rapport atomique du métal de base sur le métal précieux soit compris entre 0,1 et 10.

Ces catalyseurs présentent, pour certains, une durabilité accrue par rapport à la phase métallique active seule. Mais les dopants utilisés sont adaptés à des conditions de température très sévères qui peuvent dépasser 1000°C. Ils ne permettent pas de limiter efficacement la dégradation des performances du catalyseur intervenant à des températures modérées, qui peut avoir des causes diverses et différentes de celles à l'origine de la dégradation à des températures élevées.

Il a été également proposé de juxtaposer plusieurs catalyseurs différents dans un réacteur à étages catalytiques; les premiers catalyseurs étant plus spécifiquement dédiés à l'amorçage de la réaction de combustion, les suivants servant à stabiliser la réaction de combustion à haute température, le nombre d'étages (ou de zones) catalytiques étant ajusté en fonction des conditions imposées par l'application envisagée. Ainsi sont connus les systèmes suivants:
1^{ère} zone catalytique: Pd et Pt et NiO; et 2^{ème} zone catalytique: Pt et Pd; par exemple, ainsi que décrit dans la demande de brevet européen EP-A-198 948.
1^{ère} zone catalytique: Pd et/ou Pt; 2^{ème} zone catalytique: Sr_{0.8}La_{0.2}MnAl₁₁O_{19-α} et 3^{ème} zone catalytique:Sr_{0.8}La_{0.2}MnAl₁₁O_{19-α}: par exemple, ainsi que décrit dans la demande de brevet japonais JP-A-04/197 443.
l^{ère} zone catalytique: Pd et (Pt ou Ag); 2^{ème} zone catalytique:Pd et (Pt ou Ag); et 3^{ème} zone catalytique: pérovskite ABO₃ ou oxyde de métal du groupe V(Nb ouV), du groupe VI (Cr) ou du groupe VIII (Fe, Co, Ni); par exemple, ainsi que décrit dans les demandes de brevet international WO-A-92/9848 et WO-A-92/9849.

On sait par ailleurs que, en ce qui concerne les véhicules automobiles alimentés au gaz naturel, le gaz naturel est un carburant prometteur qui répond aux préoccupations croissantes en matière de protection de l'environnement. C'est un carburant aujourd'hui utilisé par bien plus d'un million de véhicules dans le monde (270 000 en Italie, 250 000 en Russie, 150 000 en Argentine, 50 000 en Nouvelle-Zélande, 40 000 aux Etats-Unis, 40 000 au Canada). Des véhicules personnels et utilitaires fonctionnent en bicarburation essence ou gaz naturel. Des véhicules à moteur Diesel (en particulier des autobus) ont été adaptées à un fonctionnement au gaz naturel. Un développement limité de ces types de véhicules est programmé dans quelques pays européens (Pays-bas, Danemark, Suisse, Belgique) et de manière plus forte au Canada, aux Etats-Unis et en Australie. Le méthane représente de l'ordre de 5 à 10% (environ 100-200 ppmC) des émissions de base d'hydrocarbures de véhicules à essence. Cette proportion monte à 10-20% après passage sur un catalyseur car le méthane est moins bien éliminé que les autres hydrocarbures. Il représente plus de 95% des hydrocarbures (environ 1500 ppmC, soit 5 à 10 fois plus que les émissions des moteurs à essence) contenus dans les gaz d'échappement des véhicules à richesse régulée fonctionnnant au gaz naturel. Ainsi, pour le cycle normalisé 13-modes européen d'un moteur d'autobus fonctionnant au gaz naturel en mélange pauvre, plusieurs mesures de la composition des gaz d'échappement par chromatographie en phase gazeuse en ligne montrent que celle-ci ne varie pas significativement, ni en fonction de la richesse, ni en fonction de la charge et du régime (voir Tableaux A et B ci-dessous).

**Tableau A: Influence de la richesse sur la composition pour le point pleine charge 1260 tr/min 1000 m.N**

| Gaz de Lacq | méthane | éthane | éthylène | propane | propylène | isobutane | acétylène | butane |
|---|---|---|---|---|---|---|---|---|
| | 97,4 | 1,87 | - | 0,11 | - | - | - | 0,21 |
| R= 0.66 | 97,23 | 1,88 | 0,69 | 0,09 | 0,02 | 0,02 | 0,04 | 0,03 |
| R=0.60 | 97,43 | 2,02 | 0,33 | 0,1 | 0,01 | 0,03 | 0,08 | 0,00 |
| R=0.58 | 96,28 | 2,51 | 0,99 | 0,09 | 0,02 | 0,04 | 0,06 | 0,00 |

**Tableau B: Comparaison de la composition à iso-richesse 0.60 pour deux points à faible charge, 1260 tr/min 100 m.N et 2100tr/min 90 m.N**

| | méthane | éthane | éthylène | propane | propylène | isobutane | acétylène | butane |
|---|---|---|---|---|---|---|---|---|
| 1260 tr/min | 96,51 | 2,29 | 0,93 | 0,09 | 0,02 | 0,02 | 0,08 | 0,04 |
| 2100 tr/min | 95,46 | 3,08 | 1,19 | 0,09 | 0,03 | 0,06 | 0,07 | 0,0 |

Par ailleurs, les températures des gaz d'échappement issus de ce moteur fonctionnant au gaz naturel sont relativement basses (de 350°C à 530°C). Le développement de différents types de véhicules fonctionnant au gaz naturel couplé à leurs émissions élevées de méthane devrait entraîner une augmentation des rejets de méthane. La mise au point de formulations dédiées au traitement de ces gaz d'échappement est donc impérative.

Malgré les nombreux travaux de perfectionnement déjà réalisés, il reste intéressant de rechercher des catalyseurs ayant une activité et une stabilité accrues notamment à basse température dans le domaine de la combustion catalytique et dans le domaine de la dépollution des gaz d'échappement des véhicules à moteur alimentés au gaz naturel. En effet, en combustion catalytique, les solutions proposées telles que les formulations à base d'hexaaluminates dopées par un métal précieux ou la mise en oeuvre de différentes formulations dans un réacteur à plusieurs étages catalytiques ne résolvent pas le problème de stabilité de la phase active à basse température également responsable de la dégradation des performances. De la même façon, le problème posé par la stabilité des catalyseurs utilisés pour la dépollution des gaz d'échappement des véhicules à moteur alimentés au gaz naturel et qui fonctionnent entre 300 et 600°C n'a pas été résolu. Parmi les causes envisagées pour cette dégradation des performances à basse température, le frittage et/ou l'empoisonnement de la phase métallique ainsi que la modification de l'état d'oxydation de la phase active font partie de celles les plus couramment citées.

On connaît par ailleurs, selon le brevet européen EP-B-27069, des catalyseurs pour le traitement des gaz d'échappement de moteur à combustion interne comportant du fer et du cérium associés à des métaux du groupe du platine déposés sur un oxyde inorganique réfractaire.

Les travaux de recherche menées par la demanderesse l'ont conduite à découvrir que, de façon surprenante, des catalyseurs contenant à la fois du cérium, du zirconium, du fer et des métaux précieux dans des proportions sélectionnées, tout en remédiant aux inconvénients présentés par les catalyseurs de l'art antérieur, s'avèrent présenter une excellente activité ainsi qu'une stabilité remarquable au cours du temps, pour les réactions d'oxydation non-sélective.

Le document EP-A-0 125 565 divulgue un catalyseur pour le traitement des gaz d'échappement obtenu par un procédé qui comprend le mélange avec de l'alumine active, de cérium, de zirconium, d'au moins un métal choisi parmi le fer et le nickel, d'au moins un métal choisi parmi le platine, le palladium et le rhodium (et facultativement d'au moins un métal choisi parmi le néodyme, le lanthane et le praséodyme), chaque métal étant sous la forme d'une solution ou d'une dispersion aqueuse d'un composé soluble ou facilement dispersable dans l'eau, le sèchage du mélange obtenu, sa calcination, la dispersion de la composition catalytique obtenue dans un milieu aqueux et le dépôt de la dispersion sur un substrat nid d'abeille monolithique.
Les teneurs en métaux choisis parmi le platine, le palladium et le rhodium effectivement divulguées sont de 1,5 g par litre de catalyseur.

La présente invention propose donc un catalyseur d'oxydation non-sélective **caractérisé en ce qu**'il comprend un substrat monolithique, un support poreux à base d'oxyde inorganique réfractaire et une phase active constituée de cérium, de zirconium, de fer et d'au moins un métal choisi dans le groupe formé par le palladium et le platine; la teneur en support poreux étant comprise entre 200 et 400 g par litre de catalyseur; la teneur en cérium étant comprise entre 0,3% et 20% en poids par rapport au support poreux; la teneur en zirconium étant comprise entre 0,3 % et 20% en poids par rapport au support poreux; la teneur en fer étant comprise entre 0,01 et 3,5% de fer en poids par rapport au support poreux; et la teneur en palladium et/ou platine étant comprise entre 3 et 20 g par litre de catalyseur; et ledit support est stabilisé thermiquement par de la silice, la teneur en silice étant comprise entre 1 et 6% en poids par rapport au support poreux.

Selon des caractéristiques préférées du catalyseur de la présente invention, la teneur en support poreux est comprise entre 200 et 350 g par litre de catalyseur; la teneur en cérium est comprise entre 2 et 15 % en poids par rapport au support poreux; la teneur en zirconium est comprise entre 2 et 15% en poids par rapport au support poreux, la teneur en fer est comprise entre 0,1 à 2% en poids par rapport au support; et la teneur en palladium et/ou platine est comprise entre 5 et 20 g par litre de catalyseur.

La teneur en support poreux du catalyseur selon l'invention varie de façon préférentielle entre 200 et 400 g par litre de catalyseur et de façon encore plus préférentielle entre 200 et 350 g/l. Si la teneur en support poreux est inférieure à 200g, l'activité catalytique n'est pas suffisante pour répondre aux exigences d'un procédé de combustion ou de dépollution des gaz d'échappement de véhicules fonctionnant au gaz naturel. Inversement, une teneur en support poreux supérieure à 400 g/l est également néfaste pour l'activité catalytique car elle entraine un bouchage des canaux du monolithe.

Dans les catalyseurs de l'invention, le substrat monolithique peut consister en un monolithe à structure cellulaire en céramique ou métallique (enroulement, empilement de feuillards métalliques ou encore association de fibres métalliques ou de fils métalliques sous la forme d'un monolithe à structure fibreuse). La céramique employée peut être de la mullite, de la cordierite, de l'alumine-α, de la zircone, du titanate d'alumine, du carbure de silicium, du nitrure de silicium ou leurs mélanges. Les alliages métalliques employés doivent présenter de préférence des propriétés réfractaires. Ils peuvent par exemple être composés de fer, chrome, d'aluminium et de cérium ou d'yttrium, tels que l'acier Gilphal 135® de la société Imphy. Le substrat métallique peut être préalablement soumis à un traitement oxydant à une température comprise entre 700°C et 1200°C, de préférence entre 800 et 1000°C. La structure cellulaire peut être de forme hexagonale, tétragonale, triangulaire ou ondulée, elle doit permettre le passage des gaz dans les conduits formés lors de leur fabrication par extrusion, laminage, solidification d'éléments en forme de feuilles. La densité de cellules, c'est à dire le nombre de cellules par section de monolithe, est généralement comprise entre 50 et 600 cellules par pouces-carrés (7,75 à 93 cellules par cm²).

Les catalyseurs selon l'invention apportent des performances améliorées spécialement dans les procédés de combustion catalytique d'hydrocarbures, de monoxyde de carbone, d'hydrogène ou de leurs mélanges et de dépollution des gaz d'échappement des véhicules fonctionnant au gaz naturel. Mais ils sont également utilisables dans tous les procédés d'oxydation catalytique opérant à des températures élevées.

La préparation et la mise en forme du support peuvent constituer la première étape de la préparation de ces catalyseurs. Le support à base d'oxyde réfractaire mis en oeuvre selon l'invention est généralement choisi dans le groupe formé par les oxydes réfractaires des métaux des Groupes IIa, IIIa, IVa et IVb de la classification périodique des éléments et leurs mélanges en toutes proportions.

Le plus souvent, l'oxyde d'aluminium de formule générale Al₂O₃, nH₂O est utilisé. Sa surface spécifique est comprise entre 10 et 500 m²/g. Cet oxyde dans lequel n est compris entre 0 et 0,6, est classiquement obtenu par déshydratation contrôlée d'hydroxydes dans lesquels 1≤n≤3. Ces hydroxydes sont eux-mêmes préparés par précipitation en milieu aqueux de sels d'aluminium par des bases ou des acides. Les conditions de précipitation et de mûrissement déterminent plusieurs formes d'hydroxydes dont les plus communs sont la boehmite (n=1), la gibbsite et la bayerite (n=3). En fonction des conditions hydrothermiques de traitement, ces hydroxydes donnent plusieurs oxydes ou alumines de transition. On dénombre ainsi les formes alpha, delta, éta, gamma, kappa, khi, rhô et théta. Celles-ci se différencient essentiellement par l'organisation de leur structure cristalline. Lors de traitements thermiques, ces différentes formes sont susceptibles d'évoluer entre elles, selon une filiation complexe qui dépend des conditions opératoires de traitement. La forme alpha qui présente une surface spécifique très faible est stable à plus haute température. On préfère utiliser des alumines présentant une surface spécifique comprise entre 20 et 250 m²/g et en particulier l'alumine gamma et/ou delta.

Afin d'augmenter la stabilité thermique de ce ou ces oxydes, divers composés peuvent être incorporés au support poreux, soit directement sous la forme de pigments, soit sous la forme de composés précurseurs d'oxydes. La silice est incorporé, à une teneur comprise entre 1% et 6% poids de silice par rapport au support poreux.

D'une manière générale, ces supports mis en oeuvre selon la présente invention peuvent avoir avantageusement été traités, ainsi qu'il est bien connu de l'homme de l'art, par des agents porogènes tels que ceux à base de cellulose, naphtaline, gommes naturelles ou polymères synthétiques, de façon à leur conférer des propriétés de porosité désirée.

La teneur en métal du groupe constitué par le platine et le palladium du catalyseur selon l'invention est d'au moins 3 g par litre de catalyseur et de préférence entre 5 et 20 g/l. Si la teneur en métal précieux est inférieure à 3 g, l'activité catalytique n'est pas suffisamment élevée pour satisfaire aux exigences d'un procédé de combustion. A l'opposé, lorsque la teneur en métal précieux dépasse 20 g, une augmentation ultérieure de la teneur en métal précieux ne permet pas d'accroître de façon significative l'activité catalytique. Des teneurs supérieures à 20 g de métal précieux par litre de catalyseur ne sont pas cependant exclues. Selon l'invention, le palladium est préféré. Toutefois, le platine peut être avantageusement utilisé pour un étage de combustion fonctionnant à des températures relativement basses, par exemple à environ 500°C, ou en combinaison avec le palladium.

La présence de cérium et de zirconium déposés simultanément sur le ou les oxydes inorganiques réfractaires permet de renforcer l'activité et la stabilité du catalyseur au cours du temps. Le fer peut encore accentuer cet effet de synergie.

La teneur en cérium des catalyseurs de la présente invention est comprise entre 0,3 et 20 % en poids par rapport au support, et de façon préférentielle entre 2 et 15 % en poids par rapport au support poreux. Si la teneur en cérium est inférieure à 0,3 %, celui-ci ne promeut pas de façon satisfaisante l'activité catalytique. Inversement, lorsque la teneur en cérium dépasse 20% en poids par rapport au support poreux, une augmentation ultérieure de la teneur en cérium ne permet pas d'accroître de façon significative l'activité catalytique.

La teneur en zirconium des catalyseurs de la présente invention est comprise entre 0,3 et 20% en poids de support poreux , et de façon préférentielle entre 2 et 15% en poids par rapport au support poreux. Lorsque la teneur en zirconium est inférieure à 0,3 %, son effet sur l'activité catalytique est négligeable. A l'opposé, lorsque la teneur en zirconium atteint 20% en poids par rapport au support poreux, une augmentation ultérieure de la teneur en zirconium ne permet pas d'accroître de façon significative l'activité catalytique.

La teneur en fer des catalyseurs selon l'invention est comprise entre 0,01 et 3,5% en poids par rapport au support et plus particulièrement entre 0,1 et 2 %. Si la teneur en fer dépasse 3,5 %, le fer alors peut accélérer fortement la chute de surface spécifique du support poreux à base d'alumine.

La préparation de ces catalyseurs déposés sur un substrat consiste en une étape d'enduction au cours de laquelle le substrat est plongé dans une suspension contenant les précurseurs des composants du catalyseur, puis est séché et calciné après évacuation de l'excès de ladite suspension. Une deuxième étape dite d'imprégnation permet de déposer les métaux actifs. Pour cela, on met en contact le substrat enduit avec une ou plusieurs solutions du des précurseurs des métaux actifs. Après avoir été éventuellement égoutté, le substrat ainsi enduit et imprégné est séché et subit un traitement thermique.

Le dépôt de cérium, de zirconium et de fer sur le support de catalyseur de la présente invention est réalisable selon toutes les techniques connues de l'homme de l'art et peut intervenir à tout moment lors de la préparation du catalyseur. Ils peuvent être introduits sous forme de composés solides (oxydes, hydroxydes, carbonates, hydroxycarbonates ou encore sels insolubles) ou de composés solubles (nitrates, sulfates, chlorures, alcoolates) dans la suspension d'enduction, et/ou pré-imprégnés sur l'un des constituants de la suspension d'enduction, et/ou déposés sur le support poreux avant l'imprégnation des métaux, et/ou coimprégnés avec les métaux selon la technique envisagée. Dans le cas où le cérium, le zirconium et le fer sont déposés après la mise en forme des alumines contenant éventuellement d'autres métaux, les méthodes employées peuvent être par exemple l'imprégnation à sec, l'imprégnation par excès de solution ou l'échange ionique. Sur un support déjà mis en forme, une méthode préférée d'introduction de cet élément additionnel est l'imprégnation en milieu aqueux en utilisant un excès de solution. Afin d'éliminer le solvant d'imprégnation, cette imprégnation est suivie d'un séchage et d'une calcination sous air à une température comprise entre 300 et 900°C.

Selon un mode de mise en oeuvre particulier, on imprègne successivement le support avec une solution contenant des composés contenant du cérium, du zirconium et du fer, puis avec une ou des solutions contenant des composés des métaux précieux que l'on souhaite introduire.

Comme composés du cérium, du zirconium et du fer que l'on peut mettre en oeuvre, on citera notamment les sels de cérium, de zirconium et de fer, et plus particulièrement le nitrate céreux, l'acétate céreux, le chlorure céreux et le nitrate cérique ammoniacal, le nitrate de zirconyle et le tétrachlorure de zirconium, et le nitrate ferrique, le citrate de fer ammoniacal et le chlorure ferrique,

Les précurseurs des métaux du groupe formé par le platine et le palladium sont ceux classiquement utilisés pour la préparation des catalyseurs, en particulier les chlorures, les complexes chlorés, les nitrates, les complexes amminés, les acétylacétonates. A titre d'exemples, on peut citer l'acide chloroplatinique, le chlorure de palladium, le chlorure de platine tétrammine, le dinitrodiamminoplatine et le nitrate de palladium.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique et oxalique.

Les catalyseurs selon l'invention apportent des performances améliorées spécialement dans les procédés de combustion catalytique d'hydrocarbures tels que du méthane, de monoxyde de carbone, d'hydrogène ou de leurs mélanges et dans les procédés de dépollution des gaz d'échappement des véhicules fonctionnant au gaz naturel. Mais ils sont également utilisables dans tous les procédés catalytiques nécessitant des températures élevées.

Par ailleurs, les réacteurs de combustion catalytique peuvent comporter un ou plusieurs étages catalytiques dont les formulations peuvent être différentes. Les catalyseurs de la présente invention peuvent être utilisés dans des réacteurs à un étage ou à plusieurs étages catalytiques. Dans ce dernier cas, ils sont utilisés de façon préférentielle dans le (ou les) étage(s) catalytique(s) qui fonctionne(nt) à des températures inférieures à 1100°C.

Les exemples suivants illustrent l'invention sans toutefois la limiter :

Les divers précurseurs employés sont des produits commerciaux de PROLABO®. La composition élémentaire des catalyseurs a été déterminée par fluorescence X (PHILIPS PW 1480^{®}).

### EXEMPLE 1 : Préparation de catalyseurs C1 à C5

On dépose du cérium, du zirconium et du fer sur de l'alumine gamma par imprégnation de 700 g d'alumine par une solution aqueuse de nitrate céreux, de nitrate de zirconyle et de nitrate ferrique. Cette solution contient l'équivalent de 51,5g d'oxyde de cérium (CeO₂), 43 g d'oxyde de zirconium (ZrO₂) et de 6,5 g d'oxyde de fer (Fe₂O₃).

On prépare une suspension d'enduction à partir de deux litres d'eau désionisée additionnée de l'équivalent de 12 g d'acide nitrique, 600 g d'alumine de type gamma préalablement imprégnée de cérium, de zirconium et de fer et de 140 g de boehmite à 72% de matière sèche. Cette suspension est broyée de telle manière que la taille des particules soit inférieure à 10 microns.

Dans une première étape dite d'enduction, un monolithe en cordiérite de 0,84 litre présentant 62 cellules par cm² (400 cellules par pouce-carré) est immergé dans la suspension, puis égoutté avant que l'excès de suspension soit éliminée par soufflage. Le support est ensuite séché puis calciné dans un four dont la température est maintenue à 600°C pendant deux heures. Ces étapes d'immersion, de soufflage et de calcination sont renouvelées une deuxième fois, voire une troisième fois, afin de déposer l'équivalent de 200g de support poreux par litre de catalyseur (substrat).

Dans une seconde étape dite d'imprégnation, le monolithe enduit est immergé dans une solution de nitrate de palladium de telle manière que la quantité de palladium fixée après séchage et calcination à 500°C pendant deux heures soit de 3% en poids de palladium par rapport au support poreux, soit encore exprimé par rapport au volume de catalyseur : 6 g de palladium par litre de catalyseur.

Ce catalyseur C1 ainsi préparé contient en poids rapporté au support poreux 6% de cérium, 4,55 % de zirconium et 0,5 % de fer et 3 % de palladium.

Puis, quatre monolithes en céramique de 0,84 litre sont enduits par cette suspension, selon le procédé décrit ci-dessus, de façon à déposer respectivement 250g, 300 g, 350 g et 400 g de support poreux par litre de catalyseur (substrat).

Ces quatre monolithes sont imprégnés ensuite à iso-teneur en palladium par rapport au substrat soit 6 g de palladium par litre de catalyseur, correspondant respectivement à 2,4%, 2%, 1,71% et 1,5% en poids de palladium par rapport au support poreux.

Les catalyseurs ainsi préparés sont numérotés respectivement C2, C3, C4 et C5.

### EXEMPLE 2 : Préparation des catalyseurs C6 et C7

Afin de montrer l'effet d'une diminution de la teneur en support poreux à iso-teneur en métal sur la stabilité de l'activité catalytique d'une formulation, deux monolithes en cordierite de 0,84 litre sont enduits par une suspension préparée comme décrit dans l'exemple 1, de façon à déposer respectivement 100 g et 150 g de support poreux par litre de catalyseur (substrat).

On imprègne ensuite chacun de ces deux monolithes par une solution de palladium de façon à déposer 6 g de palladium par rapport à un litre de catalyseur.

Le catalyseur C6 ainsi préparé contient en poids rapporté au support poreux 6% de cérium, 4,55% de zirconium et 0,5% de fer et 6% de palladium. Le catalyseur C7 ainsi préparé contient en poids rapporté au support poreux 6% de cérium, 4,55% de zirconium et 0,5% de fer et 4% de palladium.

### EXEMPLE 3 : Activité catalytique des catalyseurs C1 à C7

Dans les catalyseurs préparés (références C1, C2, C3, C4, C5, C6 et C7), on découpe des cylindres de 1,5 cm de diamètre et de 5 cm de long, dans le sens longitudinal des canaux.

Les tests sont réalisés dans un réacteur de laboratoire comportant un tube dans lequel est introduit le catalyseur. Ce tube est placé au centre d'un four cylindrique pouvant être porté à une température de 1500°C. Un mélange air-méthane à 3,5 % en volume de méthane est préparé à l'aide de régulateurs de débit massique et envoyé à l'entrée du réacteur. Le débit horaire des gaz est 50 000 fois supérieur au volume du substrat (VVH= 50 000 h⁻¹). La concentration en méthane à l'entrée et à la sortie du réacteur est déterminée à l'aide d'un détecteur à ionisation de flamme (analyseur JUM ENGINEERING modèle FID 3-300). La conversion en méthane est le rapport en pourcentage entre la différence de concentration en méthane entre l'entrée et la sortie et la concentration en entrée.

Après une montée en température sous mélange réactionnel à 5°C/mb de 250°C jusqu'à 530°C, on fixe la température d'entrée du mélange réactionnel à cette température. On détermine la conversion du méthane après 50 heures de fonctionnement en régime stabilisé. Cette durée permet de discriminer de façon significative les formulations en fonction de leur aptitude à stabiliser la combustion du méthane.

Le tableau 1 rassemble les compositions élémentaires des catalyseurs C1 à C7 et les conversions obtenues après 50 heures de fonctionnement en régime établi.

**Tableau 1 : Composition élémentaire des catalyseurs C1 à C7 et conversions de ces catalyseurs obtenues après 50 heures de fonctionnement en régime établi.**

| Référence du catalyseur | Teneur en support poreux (g/l) | Teneur en Ce (%) | Teneur en Zr (%) | Teneur en Fe (%) | Teneur en Pd (en g/l de catalyseur) | % de conversion après 50 heures de fonctionnement |
|---|---|---|---|---|---|---|
| C1 | 200 | 6 | 4,55 | 0,5 | 6 | >98 |
| C2 | 250 | 6 | 4,55 | 0.5 | 6 | >98 |
| C3 | 300 | 6 | 4,55 | 0,5 | 6 | >98 |
| C4 | 350 | 6 | 4,55 | 0,5 | 6 | >95 |
| C5 | 400 | 6 | 4,55 | 0,5 | 6 | > 90 |
| C6 | 100 | 6 | 4.55 | 0,5 | 6 | ≈ 40 |
| C7 | 150 | 6 | 4,55 | 0,5 | 6 | ≈ 75 |

Le tableau 1 montre clairement que l'augmentation de la teneur en alumine à iso-teneur en palladium pour le catalyseur de la présente invention améliore de façon significative la stabilité de l'activité catalytique du catalyseur. Une teneur en support poreux supérieure à 200 g/l est nécessaire pour ateindre les performances exigées par les réacteurs de combustion catalytiques. Toutefois une teneur trop élevée en support poreux c'est à dire supérieure à 400 g/l se révèle être néfaste en raison notamment du bouchage des canaux du monolithe lors de l'enduction.

### EXEMPLE 4 : Préparation des catalyseurs C8 à C10.

On dépose du cérium, du zirconium et du fer sur de l'alumine gamma par imprégnation de 700g d'alumine par une solution aqueuse de nitrate céreux, de nitrate de zirconyle et de nitrate ferrique. Cette solution contient l'équivalent de 51,5g d'oxyde de cérium (CeO₂), 7,8g d'oxyde de zirconium (ZrO₂) et de 6,5 g d'oxyde de fer (Fe₂O₃).

On prépare une suspension d'enduction à partir de deux litres d'eau désionisée additionnée de l'équivalent de 12g d'acide nitrique, 600g d'alumine de type gamma préalablement imprégnée de cérium, de zirconium et de fer et de 140 g de boehmite à 72% de matière sèche. Cette suspension est broyée de telle manière que la taille des particules soit inférieure à 10 microns.

Trois monolithes en cordiérite de 0,84 litre sont enduits par cette suspension d'alumine, selon le procédé de exemple 1, de façon à déposer 250g de support poreux par litre de catalyseur (substrat).

On imprègne alors chaque monolithe séparément par une solution de palladium de façon à déposer respectivement 6%, 4% et 2% en poids de palladium par rapport à la couche enduite imprégnée, soit encore exprimé par rapport au volume de catalyseur : respectivement 15 g, 10 g et 5 g de palladium par litre de catalyseur.

Les catalyseurs C8, C9 et C10 ainsi préparés contiennent en poids rapporté à la couche enduite imprégnée 6% de cérium, 1 % de zirconium et 0,5 % de fer et respectivement 6 % de palladium pour C8, 4% de palladium pour C9 et 2% pour C10.

### EXEMPLE 5 : Préparation des catalyseurs C11 à C13

Afin de montrer l'effet de la teneur en palladium sur l'activité catalytique, deux monolithes de 0,84 litre en cordierite sont enduits par une suspension identique à celle utilisée dans l'exemple 3, selon le procédé de l'exemple 1, de façon à déposer 250 g de support poreux par litre de catalyseur (substrat).

On imprègne alors chaque monolithe séparément par une solution de palladium de façon à déposer respectivement 0,8 %, 0,4 % et 0,2 % en poids de palladium par rapport à la couche enduite imprégnée, soit encore exprimé par rapport au volume de catalyseur : respectivement 2 g, 1 g et 0,5 g de palladium par litre de catalyseur.

Les catalyseurs C11, C12 et C13 ainsi préparés contiennent en poids rapporté à la couche enduite imprégnée 6% de cérium, 1 % de zirconium et 0,5 % de fer et respectivement 0,8% de palladium pour C11, 0,6% de palladium pour C12 et 0,2% pour C13.

### EXEMPLE 6 : Activité catalytique des catalyseurs C8 à C13

Dans les catalyseurs préparés (références C8 à C13), on découpe des cylindres de 1,5 cm de diamètre et de 5 cm de long, dans le sens longitudinal des canaux.

La procédure d'évaluation de l'exemple 2 est reprise afin de comparer les catalyseurs C8 à C13 présentant des teneurs en palladium différentes.

Le tableau 2 rassemble les compositions élémentaires des catalyseurs C8 à C13 et les conversions obtenues après 50 heures de fonctionnement en régime établi.

**Tableau 2 : Composition élémentaire des catalyseurs C8 à C13 et conversions de ces catalyseurs obtenues après 50 heures de fonctionnement en régime établi.**

| Référence du catalyseur | Teneur en support poreux 5g/l° | Teneur en Ce (%) | Teneur en Zr (%) | Teneur en Fe (%) | Teneur en Pd (en g/l de catalyseur) | % de conversion après 50 heures de fonctionnement |
|---|---|---|---|---|---|---|
| C8 | 250 | 6 | 1 | 0,5 | 15 | >98 |
| C9 | 250 | 6 | 1 | 0,5 | 10 | >98 |
| C10 | 250 | 6 | 1 | 0,5 | 5 | >98 |
| C11 | 250 | 6 | 1 | 0,5 | 2 | ≈75 |
| C12 | 250 | 6 | 1 | 0,5 | 1 | ≈40 |
| C13 | 250 | 6 | 1 | 0,5 | 0,5 | ≈30 |

Ce tableau 2 montre donc clairement qu'une teneur en métal précieux, supérieure à celles couramment utilisées en post-combustion, comme employée par les catalyseurs C8 à C10 selon l'invention, est nécessaire pour satisfaire aux exigences sévères d'un procédé de combustion catalytique. En revanche, les catalyseurs C11 à C13, dont les teneurs en palladium et en alumine sont représentatives des catalyseurs de post-combustion automobile, ne conservent pas une stabilité suffisante en combustion catalytique du méthane, application dont les conditions opératoires sont fort éloignées des conditions opératoires de la post-combustion. Toutefois, une teneur trop élevée en métal précieux n'améliore pas de façon significative les performances catalytiques.

### EXEMPLE 7: Préparation de catalyseurs C14, C16 et C17 comparatifs et C15, C18 à C20 selon l'invention

Afin d'évaluer l'impact de différents dopants de l'alumine (Si, La, Ba) sur la stabilité du catalyseur selon l'invention, on prépare quatre suspensions d'alumine identiques à 30% de matière sèche. La première est conservée telle quelle ; aux trois autres suspensions, on additionne respectivement une solution soit de silicium, soit de lanthane, soit de baryum de manière à ce que le rapport atomique (cation dopant /Al total) = 0,01

Quatre monolithes en céramique de 0,84 1 sont enduits séparément par ces suspensions, selon le procédé de l'exemple 1, de façon à déposer 250 g de support poreux par litre de catalyseur (substrat).

Puis, chaque monolithe enduit est alors imprégné par une solution aqueuse de nitrate céreux, de nitrate de zirconyle et de nitrate ferrique. Cette solution contient l'équivalent de 21,5g d'oxyde de cérium (CeO₂), 17,9g d'oxyde de zirconium (ZrO₂) et de 1,61 g d'oxyde de fer (Fe₂O₃). Ils sont ensuite séchés à 120°C et calcinés à 500°C pendant deux heures.

On imprègne enfin chacun de ces quatre monolithes par une solution de palladium de façon à déposer en poids 2,4% de palladium par rapport au support poreux enduit, soit encore rapporté au catalyseur : 6 g de palladium par litre de catalyseur.

Le catalyseur C14 ainsi préparé contient en poids rapporté au support poreux 7% de cérium, 5,3% de zirconium, 0,5% de fer, et 2,4% de palladium, le catalyseur C15 ainsi préparé contient en poids rapporté au support poreux 7% de cérium, 5,3% de zirconium, 0,5% de fer, 0,55% de silicium (soit 1,17% de SiO₂) et 2,4% de palladium, le catalyseur C16 ainsi préparé contient en poids rapporté au support poreux 7% de cérium, 5,3% de zirconium, 0,5% de fer, 2,7% de La₂O₃ et 2,4% de palladium et le catalyseur C17 ainsi préparé contient en poids rapporté au support poreux 7% de cérium, 5,3% de zirconium, 0,5% de fer, 2,7% de BaO et 2,4% de palladium.

Par ailleurs, on prépare de la même façon que le catalyseur C15 des catalyseurs C18, C19 et C20 contenant une teneur plus élevée en silice, respectivement 2%, 4% et 6%.

### EXEMPLE 8 : Stabilité thermique des catalyseurs C14, C16 et C17 comparatifs et C15, C18 à C20 selon l'invention

Le test de vieillissement hydrothermique est réalisé dans un réacteur de laboratoire comportant un tube dans lequel est introduit le catalyseur. Ce tube est placé au sein d'un four cylindrique pouvant être porté à une température de 1200°C.

Un mélange air/1%vapeur d'eau est envoyé à l'entrée du réacteur. Le débit est de 11/h/gramme de catalyseur. La température est fixée à 900°C, mesurée à l'aide d'un thermocouple et la durée du traitement est de 4 heures. Ces conditions opératoires ont été choisies car elles sont représentatives des conditions de fonctionnement d'un catalyseur de combustion dans un premier étage d'un réacteur de combustion catalytique. On a mesuré la surface du catalyseur après un tel traitement en fonction de la nature des dopants. Le tableau 3 rassemble les compositions élémentaires et la surface mesurée.

**Tableau 3: Composition élémentaire des catalyseurs C14 à C20 et surface après vieillissement hydrothermique à 900°C-4h-1%eau**

| Référence du catalyseur | Teneur en Ce (%) | Teneur en Zr (%) | Teneur en Fe (%) | Teneur en Pd (en g/l de catalyseur) | Teneur en oxyde stabilisant (%pds) | Surface mesurée après vieillissement hydrothermique (m²/g) |
|---|---|---|---|---|---|---|
| C14 comparatif | 7 | 5.30 | 0.5 | 6 | 0 | 140 |
| C15 comparatif | 7 | 5,30 | 0.5 | 6 | SiO₂ (1,17%) | 154 |
| C16 comparatif | 7 | 5.30 | 0,5 | 6 | La₂O₃ (2,7%) | 140 |
| C17 comparatif | 7 | 5,30 | 0.5 | 6 | BaO(2,7%) | 140 |
| C18 | 7 | 5,30 | 0,5 | 6 | SiO₂(2%) | 161 |
| C19 | 7 | 5,30 | 0.5 | 6 | SiO₂(4%) | 165 |
| C20 | 7 | 5,30 | 0,5 | 6 | SiO₂(6%) | 165 |

Le tableau 3 montre qu'il peut être avantageux de rajouter de la silice afin d'améliorer la résistance au frittage du support. La teneur en silice étant comprise entre 1 et 6%. Par contre, l'oxyde de lanthane et l'oxyde de baryum, qui sont plutôt des dopants intéressants pour inhiber la transformation de l'alumine se produisant vers 1100°C-1200°C : alumine thêta->alumine alpha (cf. les articles de B.Beguin intitulé "Stabilization of aluminas by addition of lanthanum" dans Appl.Cat.75,119-132, (1991) et de D.L.Trimm intitulé : "Thermal stability of catalysts supports" dans la revue Stud.Surf.Scien.Cata., Vol.68, 29-51, (1991)), se révèlent moins efficaces que la silice.

### EXEMPLE 9 : Activité catalytique des catalyseurs C1 à C7 en dépollution des gaz d'échappement des véhicules à moteur alimentés au gaz naturel

Dans les catalyseurs préparés (références C1, C2, C3, C4, C5, C6 et C7), on découpe des cylindres de 1,5 cm de diamètre et de 5 cm de long, dans le sens longitudinal des canaux.

Les tests sont réalisés dans un réacteur de laboratoire comportant un tube dans lequel est introduit le catalyseur. Ce tube est placé au centre d'un four cylindrique pouvant être porté à une température de 900°C. Un mélange oxygène-azote-méthane à 0,15 % en volume de méthane, 0,30% d'oxygène et 99,55% d'azote est préparé à l'aide de régulateurs de débit massique et envoyé à l'entrée du réacteur. Cette teneur en méthane étant représentative de la composition des gaz d'échappement de véhicules à moteur alimentés au gaz naturel. Le débit horaire des gaz est 50 000 fois supérieur au volume du substrat (VVH= 50 000 h⁻¹). La concentration en méthane à l'entrée et à la sortie du réacteur est déterminée à l'aide d'un détecteur à ionisation de flamme (analyseur JUM ENGINEERING modèle FID 3-300). La conversion en méthane est le rapport en pourcentage entre la différence de concentration en méthane entre l'entrée et la sortie et la concentration en entrée.

Après une montée en température sous mélange réactionnel à 5°C/min de 250°C jusqu'à 530°C, on fixe la température d'entrée du mélange réactionnel à cette température. On détermine la conversion du méthane après 50 heures de fonctionnement en régime stabilisé. Cette durée permet de discriminer de façon significative les formulations catalytiques du point de vue de leur stabilité à convertir le méthane en dioxyde de carbone et en eau.

Le tableau 4 rassemble les compositions élémentaires des catalyseurs C1 à C7 et les conversions en méthane obtenues après 50 heures de fonctionnement en régime établi.

**Tableau 4 : Composition élémentaire des catalyseurs C1 à C7 et conversions de ces catalyseurs obtenues après 50 heures de fonctionnement en régime stabilisé**

| Référence du catalyseur | Teneur en support poreux g/l | Teneur en Ce (%) | Teneur en Zr (%) | Teneur en Fe (%) | Teneur en Pd (en g/l de catalyseur) | % de conversion méthane après 50 heures de fonctionnement |
|---|---|---|---|---|---|---|
| C1 | 200 | 6 | 4.55 | 0,5 | 6 | >98 |
| C2 | 250 | 6 | 4,55 | 0,5 | 6 | >98 |
| C3 | 300 | 6 | 4,55 | 0.5 | 6 | >98 |
| C4 | 350 | 6 | 4,55 | 0,5 | 6 | >95 |
| C5 | 400 | 6 | 4,55 | 0.5 | 6 | > 90 |
| C6 | 100 | 6 | 4,55 | 0,5 | 6 | ≈ 30 |
| C7 | 150 | 6 | 4,55 | 0.5 | 6 | ≈ 60 |

Le tableau 4 montre clairement que l'augmentation de la teneur en alumine à iso-teneur en palladium pour le catalyseur de la présente invention améliore de façon significative la stabilité de l'activité catalytique du catalyseur. Une teneur en support poreux supérieure à 200 g/l est nécessaire pour satisfaire aux exigences de la dépollution des gaz d'échappement de véhicules à moteur alimentés au gaz naturel. Toutefois une teneur trop élevée en support poreux c'est à dire supérieure à 400g/l se révèle être néfaste en raison notamment du bouchage des canaux du monolithe lors de l'enduction.

## Revendications

1. Catalyseur d'oxydation non-sélective comprenant un substrat monolithique, un support poreux à base d'oxyde inorganique réfractaire et une phase active constituée de cérium, de zirconium, de fer et d'au moins un métal choisi dans le groupe formé par le palladium et le platine; la teneur en support poreux étant comprise entre 200 et 400 g par litre de catalyseur; la teneur en cérium étant comprise entre 0,3% et 20% en poids par rapport au support poreux; la teneur en zirconium étant comprise entre 0,3 % et 20% en poids par rapport au support poreux; la teneur en fer étant comprise entre 0,01 et 3,5% en poids par rapport au support poreux; et la teneur en palladium et/ou platine étant supérieure à 3 g par litre de catalyseur, **caractérisé en ce que** ledit support a été stabilisé thermiquement par de la silice, la teneur en silice étant comprise entre 1 et 6 % en poids par rapport au support poreux.

2. Catalyseur selon la revendication 1 **caractérisé en ce que** la teneur en support poreux est comprise entre 200 et 350 g par litre de catalyseur; la teneur en cérium est comprise entre 2 et 15 % en poids par rapport au support poreux; la teneur en zirconium est comprise entre 2 et 15% en poids par rapport au support poreux, la teneur en fer est comprise entre 0,1 à 2% de fer en poids par rapport au support poreux; et la teneur en palladium et/ou platine est comprise entre 5 et 20 g par litre de catalyseur.

3. Catalyseur selon l'un des revendications 1 et 2 **caractérisé en ce que** le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô, l'alumine théta, la silice, les silices-alumines, l'oxyde de titane, la zircone et leurs mélanges.

4. Catalyseur selon l'une des revendications 1 à 3 **caractérisé en ce que** ledit support poreux présente une surface spécifique comprise entre 20 et 250 m2/g.

5. Catalyseur selon l'une des revendications 1 à 4 **caractérisé en ce que** le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô et l'alumine théta.

6. Catalyseur selon l'une des revendications 1 à 5 **caractérisé en ce que** ledit substrat est métallique ou céramique.

7. Utilisation d'un catalyseur selon l'une des revendications 1 à 6 dans un procédé de combustion catalytique d'au moins un combustible choisi parmi les hydrocarbures, le monoxyde de carbone, l'hydrogène ou leurs mélanges en toutes proportions.

8. Utilisation selon la revendication 7 dans laquelle ledit procédé comprenant plusieurs étages catalytiques dont au moins un fonctionne à des températures inférieures à 1100°C,ledit catalyseur étant utilisé dans ledit étage ou dans au moins un desdits étages.

9. Utilisation d'un catalyseur selon l'une des revendications 1 à 6 dans un procédé de la dépollution des gaz d'échappement des véhicules à richesse régulée fonctionnant au gaz naturel.

## Claims

1. A non-selective oxidation catalyst comprising a monolithic substrate, a porous support comprising a refractory inorganic oxide and an active phase impregnated therein which is constituted of cerium, zirconium and iron and at least one metal selected from the group consisting of palladium and platinum, with the porous support content being comprised between 200 and 400 g per liter of catalyst; with the cerium content being between 0.3% and 20% by weight relative to the porous support; with the zirconium content being between 0,3 % and 20% by weight relative to the porous support; with the iron content being between 0,01 and 3,5% by weight relative to the porous support; and with the palladium and/or platinum content being greater than 3 g per liter of catalyst, **characterized in that** said support has been stabilized thermally by introducing silica, the silica content being comprised between 1 and 6 % by weight relative to the porous support.

2. Catalyst according to claim 1 **characterized in that** the porous support content is comprised between 200 to 350 g per liter of catalyst; the cerium content is between 2 and 15% by weight relative to the porous support; the zirconium content is between 2 and 15 % by weight relative to the porous support; the iron content is between 0,1 to 2% of iron by weight relative to the porous support; and the palladium and/or platinum content is between 5 and 20 g per liter of catalyst.

3. Catalyst according to one of the claims 1 or 2 **characterized in that** the refractory inorganic oxide is selected from the group consisting of alumina-alpha, alumina-delta, alumina-eta, alumina-gamma, alumina-kappa, alumina-khi, alumina-rho, alumina-theta, silica, silica-aluminas; titanium oxide, zirconia and mixtures thereof.

4. Catalyst according to one of the claims 1 to 3 **characterized in that** said porous support has a specific surface area of between 20 and 250 m² /g.

5. Catalyst according to one of the claims 1 to 4 **characterized in that** the refractory inorganic oxide porous support is selected from the group consisting of alumina-alpha, alumina-delta, alumina-eta, alumina-gamma, alumina-kappa, alumina-khi, alumina-rho and aluimina-theta.

6. Catalyst according to one of the claims 1 to 5 **characterized in that** said substrate is metal or ceramic.

7. Use of the catalyst according to one of the claims 1 to 6 in a catalytic combustion process of at least a fuel comprising hydrocarbons, carbon monoxide, hydrogen or mixtures thereof in all proportions.

8. Use according to claim 7 wherein said process comprises multiple catalytic stages of which at least one operates at a temperature lower than 1100°C, said catalyst being used in the said stage or in at least on of the said stages.

9. Use of a catalyst according to one of the claims 1 to 6 in a process of abating the pollution produced by the exhausted gases of vehicles with regulated richness that run on natural gas..

## Patentansprüche

1. Nichtselektiver Oxidationskatalysator, umfassend ein monolithisches Substrat, einen porösen Träger auf der Basis eines feuerfesten anorganischen Oxids und einer aktiven Phase, die aus Cer, Zirconium, Eisen und mindestens einem Metall gebildet wird, ausgewählt aus der Gruppe bestehend aus Palladium und Platin; wobei der Gehalt an porösem Träger im Bereich zwischen 200 und 400 g je Liter Katalysator liegt; der Gehalt an Cer im Bereich zwischen 0,3 Gew.-% und 20 Gew.-% bezogen auf den porösen Träger, liegt; der Gehalt an Zirconium im Bereich zwischen 0,3 Gew.-% und 20 Gew.-%, bezogen auf den porösen Träger, liegt; der Gehalt an Eisen im Bereich zwischen 0,01 Gew.-% und 3,5 Gew.-%, bezogen auf den porösen Träger, liegt; und der Gehalt an Palladium und/oder Platin größer als 3 g je Liter Katalysator ist, **dadurch gekennzeichnet, dass** der Träger mit Siliciumdioxid thermisch stabilisiert wurde, wobei der Gehalt an Siliciumdioxid im Bereich zwischen 1 und 6 Gew.-%, bezogen auf den porösen Träger, liegt.

2. Katalysator nach Anspruch 1, **dadurch gekennzeichnet, dass** der Gehalt an porösem Träger im Bereich zwischen 200 und 350 g je Liter Katalysator liegt; der Gehalt an Cer im Bereich zwischen 2 und 15 Gew.-%, bezogen auf den porösen Träger, liegt; der Gehalt an Zirconium im Bereich zwischen 2 und 15 Gew.-%, bezogen auf den porösen Träger; der Gehalt an Eisen im Bereich zwischen 0,1 und 2 Gew.-% Eisen, bezogen auf den porösen Träger, liegt; und der Gehalt an Palladium und/oder Platin im Bereich zwischen 5 und 20 g je Liter Katalysator liegt.

3. Katalysator nach einem der Ansprüche 1 und 2, **dadurch gekennzeichnet, dass** der poröse Träger auf Basis eines feuerfesten anorganischen Oxids ausgewählt ist aus der Gruppe, bestehend aus alpha-Aluminiumoxid, delta-Aluminiumoxid, eta-Aluminiumoxid, gamma-Aluminiumoxid, kappa-Aluminiumoxid, khi-Aluminiumoxid, rho-Aluminiumoxid, theta-Aluminiumoxid, Siliciumdioxid, Siliciumdioxid-Aluminiumoxiden, Titanoxid, Zirconium und deren Gemischen.

4. Katalysator nach einem der Ansprüche 1 bis 3, **dadurch gekennzeichnet, dass** der poröse Träger eine spezifische Oberfläche im Bereich zwischen 20 und 250 m²/g aufweist.

5. Katalysator nach einem der Ansprüche 1 bis 4, **dadurch gekennzeichnet, dass** der poröse Träger auf Basis eines feuerfesten anorganischen Oxids ausgewählt ist aus der Gruppe, bestehend aus alpha-Aluminiumoxid, delta-Aluminiumoxid, eta-Aluminiumoxid, gamma-Aluminiumoxid, kappa-Aluminiumoxid, khi-Aluminiumoxid, rho-Aluminiumoxid und theta-Aluminiumoxid.

6. Katalysator nach einem der Ansprüche 1 bis 5, **dadurch gekennzeichnet, dass** das Substrat metallisch oder keramisch ist.

7. Verwendung eines Katalysators nach einem der Ansprüche 1 bis 6 in einem Verfahren zur katalytischen Verbrennung mindestens eines Brennstoffs, ausgewählt aus Kohlenwasserstoffen, Kohlenmonoxid, Wasserstoff oder deren Gemischen in allen Anteilen.

8. Verwendung nach Anspruch 7, wobei das Verfahren mehrere katalytische Stufen umfasst, wovon mindestens eine bei Temperaturen von weniger als 1.100 °C arbeitet, wobei der Katalysator in der Stufe oder in mindestens einer der Stufen verwendet wird.

9. Verwendung eines Katalysators nach einem der Ansprüche 1 bis 6 in einem Verfahren zur Reinigung von Abgas aus Fahrzeugen mit geregeltem Krafstoffluftgemisch, die mit Erdgas arbeiten.
